Europäisches Patentamt

European Patent Office

Office européen des brevets

(11) Numéro de publication: **0 494 565 A1**

## DEMANDE DE BREVET EUROPEEN

(21) Numéro de dépôt: **91403521.7**

(22) Date de dépôt: **23.12.91**

(51) Int. Cl.⁵: **B25J 17/02**, B25J 9/10

(30) Priorité: **11.01.91 FR 9100286**

(43) Date de publication de la demande:
**15.07.92 Bulletin 92/29**

(84) Etats contractants désignés:
**CH DE GB IT LI SE**

(71) Demandeur: **ECOLE CENTRALE DES ARTS ET MANUFACTURES**
**Grande Voie des Vignes**
**F-92295 Chatenay-Malabry Cédex(FR)**

(72) Inventeur: **Herve, Jacques**
**50, rue Pasteur**
**F-77515 Pommeuse(FR)**

(74) Mandataire: **Michardière, Bernard et al**
**C/O CABINET PEUSCET 68, rue d'Hauteville**
**F-75010 Paris(FR)**

(54) **Dispositif pour le déplacement en translation spatiale d'un élément dans l'espace en particulier pour robot mécanique.**

(57) Le dispositif comporte au moins deux action-neurs (12a, 12b, 12c) du type vérin linéaire chargé de faire varier la distance linéaire sur l'axe du vérin entre un point fixe par rapport à la base (1) et un point fixe par rapport à l'élément mobile de travail (2a, 2b, 2c) des vérins, l'élément (2a, 2b, 2c) pouvant connaître des mouvements combinés de translation/ rotation selon l'axe du vérin fixe par rapport à la base (1), les parties mobiles de travail (2a, 2b, 2c) étant fixées rigidement (sans articulation) sur des barres 6a, 6b, 6c des éléments de jonction (3a, 3b, 3c) du type parallélogrammes plans articulés, la plate-forme mobile (8) étant montée en articulation de rotation (78a, 78b, 78c) sur une barre (7a, 7b, 7c) qui reste parallèle à celle §6a, 6b, 6c) fixée rigidement à la partie mobile de travail (2a, 2b, 2c), l'ensemble étant construit en respectant le parallélisme de l'axe des vérins (12a, 12b, 12c) et de l'axe de la rotation entre la barre (7a, 7b, 7c) et la plate-forme (8).

FIG. 1

L'invention concerne un dispositif pour le déplacement en translation spatiale d'un élément dans l'espace. Ce dispositif peut être la partie essentielle d'une sorte de robot mécanique destiné à des tâches de manipulation, de fabrication, d'assemblage ou de mesure.

Dans une majorité de robots mécaniques, l'actionnement des articulations se fait à l'aide de moteurs ou de motoréducteurs localisés au niveau des articulations placées en série d'une base considérée fixe jusqu'à un organe effecteur. Or, ces actionneurs mobiles sont lourds et encombrants ce qui pénalise les performances du robot.

WO 87/03528 propose plusieurs formes d'un dispositif permettant de réaliser des déplacements en translation spatiale d'un élément avec des actionneurs dont les bâtis sont fixés sur la base de référence des mouvements. Selon une première possibilité, la partie mobile de l'actionneur l'est en rotation autour d'un axe fixe par rapport à la base de référence ; selon une deuxième possibilité, la partie mobile de l'actionneur l'est en translation rectiligne sans rotation possible avec une direction fixe par rapport à la base.

L'invention a pour but, surtout, de fournir un dispositif, pour le déplacement en translation spatiale d'un élément, qui soit d'un encombrement réduit tout en offrant de larges possibilités de mouvement et tout en assurant, à l'arrêt, un maintien relativement rigide de l'élément dans la position qu'il occupe.

Selon l'invention, un dispositif pour le déplacement en translation spatiale d'une plate-forme mobile par rapport à une base servant de référence aux mouvements, comporte au moins deux actionneurs, et est caractérisé par le fait que les actionneurs sont du type vérin linéaire chargé de faire varier la distance linéaire sur l'axe du vérin entre un point fixe par rapport à la base et un point fixe par rapport à l'élément mobile de travail des vérins, l'élément pouvant connaître des mouvements combinés de translation/rotation selon l'axe du vérin fixe par rapport à la base, les parties mobiles de travail étant fixées rigidement (sans articulation) sur des barres des éléments de jonction du type parallélogrammes plans articulés, la plate-forme mobile étant montée en articulation de rotation sur une barre qui reste parallèle à celle fixée rigidement à la partie mobile de travail, l'ensemble étant construit en respectant le parallélisme de l'axe des vérins et de l'axe de la rotation entre la barre et la plate-forme.

Selon une caractéristique nouvelle et avantageuse de l'invention, les actionneurs sont du type vérin linéaire (les vérins rotatifs qui existent aussi sont exclus) ce qui autorise pour l'élément mobile de travail du vérin des mouvements de rotation et de translation combinée le long d'un axe, axe du vérin, fixe par rapport au bâti du vérin fixé sur l'élément de base qui sert de référence aux mouvements. Le rôle du vérin est de faire varier une distance linéaire entre deux points de l'axe du vérin, l'un fixe par rapport au bâti du vérin et l'autre fixe par rapport à l'élément mobile de travail du vérin. En effet, la majorité des vérins linéaires qu'ils soient hydrauliques ou pneumatiques ou bien encore électriques, ne présentent par eux-mêmes aucune résistance aux possibilités de rotation autour de l'axe du vérin. Il est donc avantageux de profiter de cette possibilité au lieu de l'éliminer comme dans WO 87/03528.

Selon une deuxième caractéristique du dispositif, il y a des éléments de jonction constitués par des parallélogrammes plans déformables à quatre barres articulées dont certains, voire la totalité, peuvent être incomplets par absence physique d'une ou de deux des quatre barres. De plus, la jonction s'effectue par deux barres restant parallèles qui sont montées d'une part en assemblage rigide sur la partie mobile de travail des vérins, d'autre part en articulation de rotation sur l'élément qui se déplace en translation spatiale.

Sauf dans le cas où tous les parallélogrammes sont incomplets, le plan des parallélogrammes complets ou incomplets peut être placé selon une position et une orientation quelconques par rapport aux éléments adjacents.

Les axes des vérins sont fixes par rapport à la base et ils peuvent être disposés de façon quelconque pourvu qu'ils ne soient pas tous parallèles.

Un nombre minimal de deux vérins permet l'obtention du guidage en translation spatiale mais alors seuls deux degrés de liberté de la translation spatiale sont actionnés par les deux vérins et un troisième degré de liberté de translation spatiale reste libre ou doit être actionné par un actionneur complémentaire. Avec trois vérins, on actionnera les trois degrés de liberté de la translation spatiale.

Les axes des rotations entre les parallélogrammes (complets ou incomplets) de jonction et la plate-forme qui se déplace en translation spatiale doivent être chacun parallèles aux axes des vérins correspondants.

Les articulations entre les barres des parallélogrammes complets ou incomplets peuvent être des couples de rotation d'axes perpendiculaires au plan des parallélogrammes ou bien parfois des couples sphériques centrés à la jonction de deux barres.

Selon une forme possible et avantageuse du dispositif, l'axe de l'articulation avec la plate-forme en translation spatiale sera confondu avec la ligne moyenne de la barre concernée du parallélogramme de jonction qui pourra alors avantageusement être dotée de couples sphériques. Dans ce dernier cas particulier, les deux couples sphériques contribuent de façon compacte à la déformabilité du parallélogramme et à la rotation de l'élément de jonction par rapport à l'élément en translation spatiale.

Selon une forme possible de l'invention, il n'y a qu'un ou deux parallélogrammes complets avec leurs quatre barres, les autres parallélogrammes sont réduits à trois de leurs barres, la quatrième barre devenant virtuelle ce qui signifie que la pensée peut établir qu'il est possible de placer cette quatrième barre, mais que ce n'est pas nécessaire. Dans ce cas, les parallélogrammes incomplets ne possèdent plus que deux articulations entre trois barres.

Selon une autre forme du dispositif, tous les parallélogrammes déformables plans sont incomplets, mais alors les deux articulations restantes dans chacun des parallélogrammes doivent être de rotation d'axe parallèle à la direction commune de l'axe du vérin correspondant et de l'axe de rotation avec la plate-forme mobile en translation spatiale. De plus, dans cette forme du dispositif, une articulation de parallélogramme peut se confondre à celle de la plate-forme mobile ce qui revient à n'avoir plus que deux barres. Cependant, la possibilité de compléter le parallélogramme par deux barres complémentaires non nécessaires peut encore être établie par la pensée.

Selon une autre variante de notre dispositif, un ou plusieurs voire la totalité des parallélogrammes déformables plans sont incomplets par absence d'une quatrième barre, mais une première et une troisième barre sont maintenues parallèles grâce à un mécanisme de transmission mécanique auxiliaire. Un tel mécanisme auxiliaire doit transmettre la rotation avec un rapport de transmission angulaire constant et égal à +1. On sait de façon bien connue réaliser un tel rapport de transmission à l'aide d'engrenages, de chaînes et pignons, de pignons et courroies dentées, de tringleries, etc...

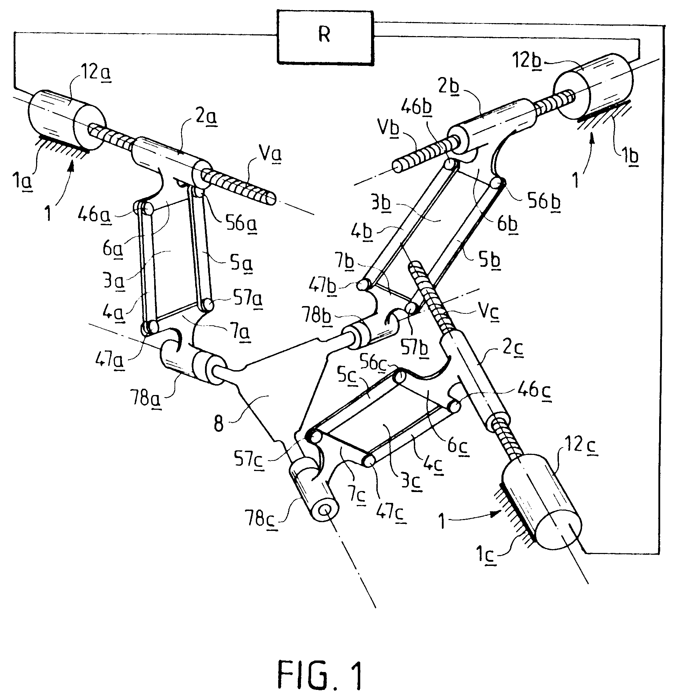

On comprendra mieux l'invention à l'aide de la description donnée à titre d'exemple du dispositif qui se réfère au dessin de la figure 1 (figure unique) qui représente une vue perspective schématique de la configuration structurale d'un dispositif selon l'invention.

En se référant à la figure 1, le dispositif comporte un élément de base 1 et un élément mobile en translation spatiale 8. Sur l'élément de base 1 sont fixés les bâtis de trois actionneurs du type vérin linéaire 12, soit 12a, 12b, 12c, qui comportent chacun une partie fixe solidaire de 1 soit 1a, 1b, 1c, et une partie mobile de travail 2, soit 2a, 2b, 2c. Les parties mobiles de travail peuvent connaître des mouvements combinés de rotation/translation selon l'axe fixe des vérins. De tels mouvements combinés sont obtenus de façons diverses en fonction de la réalisation des vérins. Un vérin peut être hydraulique ou pneumatique ou bien encore électrique. Les vérins hydrauliques ou pneumatiques associent un mécanisme de guidage autour de l'axe de rotation/translation à un ou plusieurs capsulismes (enceintes fermées de volume variable) dans lesquels on admet ou on évacue un fluide liquide ou gazeux. Les vérins électriques mettent en oeuvre le plus souvent un système vis/écrou, la vis ou l'écrou étant mis en rotation, par exemple, sous l'effet de forces électromagnétiques, par l'intermédiaire parfois d'un réducteur de vitesse. La figure 1 présente le schéma de vérins électriques avec vis tournante Va, Vb, Vc et écrou, comme pièce de travail, formé par les parties 2a, 2b, 2c. .

Dans la configuration représentée sur la figure 1, les éléments de jonction au nombre de trois sont trois parallélogrammes 3a, 3b, 3c plans articulés complets à quatre barres. Chaque parallélogramme comporte quatre barres c'est-à-dire : 4a, 5a, 6a, 7a ; 4b, 5b, 6b, 7b ; 4c, 5c, 6c, 7c. Les barres opposées restent parallèles : 4a parallèle à 5a ; 6a parallèle à 7a, etc... Les barres sont unies par des articulations 46a, 56a, 57a, 47a ; 46b, 56b, 57b, 47b ; 46c, 56c, 57c, 47c du type couple de rotation avec des axes perpendiculaires aux plans des parallélogrammes.

Les éléments de jonction 3a, 3b, 3c sont montés d'une part rigidement sur les pièces de travail 2a, 2b, 2c des actionneurs par association rigide des barres 6a, 6b, 6c des parallélogrammes et des parties mobiles de travail 2a, 2b, 2c des actionneurs ; d'autre part en articulation de rotation soit 78a, 78b, 78c sur la plate-forme 8 par formation d'un couple de rotation entre la barre 7a, 7b, 7c des parallélogrammes et l'élément 8.

Les axes des articulations 78a, 78b, 78c sont parallèles aux axes des vérins 12 correspondants: 78a parallèle à l'axe de 12a, 78b parallèle à 12b, etc...

Selon une variante d'exécution du dispositif non représenté sur la figure 1, certaines des articulations 47a, 57a, 46a, 56a, etc... peuvent être des couples sphériques et dans un cas particulier les centres des couples sphériques 47a, 57a (47b, 57b, 47c, 57c) peuvent déterminer l'axe de rotation 78a ( 78b, 78c) entre la plate-forme 8 et la barre 7a, 7b, 7c.

Selon une autre variante d'exécution du dispositif non représentée sur la figure 1, certaines des barres 5, soit 5a, 5b ou 5c, peuvent être absentes avec leurs articulations adjacentes 56 et 57, soit 56a, 56b, 56c, et 57a, 57b, 57c.

Selon une autre variante du dispositif non représentée sur la figure 1, certains parallélogrammes sont incomplets par absence des barres 5 mais les axes des articulations de rotation 46 et 47 sont parallèles à l'axe des vérins 12 correspondants et les articulations 47 peuvent être coïncidentes et confondues avec les articulations 78.

Selon une autre variante d'exécution du dispositif non représentée sur la figure 1, certains parallélogrammes sont incomplets par absence d'une barre telle que 5, mais les barres telles que 6 et 7 sont maintenues parallèles par mise en oeuvre d'un système de transmission de la rotation entre les axes 46 et 47 de rapport de transmission angulaire constant et égal à + 1.

Lorsque les actionneurs 12a, 12b, 12c sont à l'arrêt, l'élément 8 se trouve bloqué dans la position qu'il occupe.

Un déplacement de cet élément 8 est obtenu par des commandes appropriées et combinées de chaque actionneur 12a, 12b, 12c, tenant compte de la géométrie de l'ensemble et du déplacement souhaité, commandes déterminées par un calculateur électronique R envoyant des ordres aux actionneurs 12a, 12b, 12c.

Dans toutes les variantes du dispositif, les axes des vérins sont fixes par rapport à la base 1. Ces axes peuvent prendre appui sur la base 1 en plusieurs endroits afin d'éviter tout fléchissement. On a éliminé les pièces susceptibles de fléchir, allongées en porte-à-faux et solidaires des éléments mobiles des actionneurs. La raideur du dispositif de l'invention est élevée.

Ce dispositif pourra être complémenté de façon à constituer un robot.

La plate-forme 8 pourra porter un poignet de robot avec un effecteur, ce poignet étant de un, deux ou trois degrés de liberté.

Les mouvements ou actions de l'effecteur peuvent être placés sous le contrôle et la commande d'un dispositif électronique complémentaire avec utilisation d'amplificateurs appropriés.

**Revendications**

1. Dispositif pour le déplacement en translation spatiale d'une plate-forme mobile (8) par rapport à une base (1) servant de référence aux mouvements, comportant au moins deux actionneurs (12a, 12b, 12c), caractérisé par le fait que les actionneurs (12a, 12b, 12c) sont du type vérin linéaire chargé de faire varier la distance linéaire sur l'axe du vérin entre un point fixe par rapport à la base (1) et un point fixe par rapport à l'élément mobile de travail (2a, 2b, 2c) des vérins, l'élément (2a, 2b, 2c) pouvant connaître des mouvements combinés de translation/rotation selon l'axe du vérin fixe par rapport à la base (1), les parties mobiles de travail (2a, 2b, 2c) étant fixées rigidement (sans articulation) sur des barres (6a, 6b, 6c) des éléments de jonction (3a, 3b, 3c) du type parallélogrammes plans articulés, la plate-forme mobile (8) étant montée en articulation de rotation (78a, 78b, 78c) sur la barre (7a, 7b, 7c) qui reste parallèle à celle (6a, 6b, 6c) fixée rigidement à la partie mobile de travail (2a, 2b, 2c), l'ensemble étant construit en respectant le parallélisme de l'axe des vérins (12a, 12b, 12c) et de l'axe de la rotation entre la barre (7) et la plate-forme (8).

2. Dispositif selon la revendication 1, caractérisé par le fait que l'actionneur linéaire est un vérin à fluide (hydraulique ou pneumatique) associant un guidage en ligne droite, axe de rotation/translation du vérin, et un ou plusieurs capsulismes (enceintes fermées de volume variable) dans lesquels on admet ou on évacue un fluide (liquide ou gazeux).

3. Dispositif selon la revendication 1, caractérisé par le fait que l'actionneur linéaire est un vérin électrique (12a, 12b, 12c) réalisé en mettant en rotation un système vis (Va, Vb, Vc)/écrou (2a, 2b, 2c) le long de l'axe du vérin.

4. Dispositif selon l'une des revendications précédentes, caractérisé par le fait qu'un ou plusieurs parallélogrammes (3a, 3b, 3c) comportent des articulations (46a, 56a, 57a, 47a ; 46b ... 47b ; 46c... 47c) dont certaines sont des couples sphériques.

5. Dispositif selon la revendication 4, caractérisé par le fait que l'articulation (78a, 78b, 78c) de rotation entre la barre (7a, 7b, 7c) et la plate-forme (8) est réalisée par l'association de deux couples sphériques coïncidents et confondus avec les articulations (47a, 57a ; 47b, 57b ; 47c, 57c).

6. Dispositif selon l'une des revendications 1 à 3, caractérisé par le fait que certains au moins des parallélogrammes (3a, 3b, 3c) sont incomplets par absence de deux barres (5a, 7a ; 5b, 7b ; 5c, 7c), l'articulation de rotation (47a, 47b, 47c) étant coïncidente et confondue avec l'articulation (78a, 78b, 78c) de la plate-forme (8).

7. Dispositif selon l'une des revendications 1 à 3, caractérisé par le fait que certains au moins des parallélogrammes (3a, 3b, 3c) sont incomplets par absence d'une barre (5a, 5b, 5c) et que le parallélisme des barres (6a, 7a ; 6b, 7b ; 6c, 7c) est assuré par un mécanisme auxiliaire de transmission angulaire de rapport constant et égal à + 1.

8. Dispositif selon l'une des revendications précédentes, caractérisé par le fait que certains parallélogrammes mais non la totalité sont incomplets par la seule absence de la barre (5a, 5b, 5c).

9. Dispositif selon l'une des revendications précédentes, caractérisé par le fait que l'élément (8) porte un mécanisme d'orientation connu sous l'appellation de poignet de robot, avec un, deux ou trois degrés de liberté.

10. Dispositif selon l'une des revendications précédentes, caractérisé par le fait qu'il comporte un organe effecteur.

FIG. 1

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 263 627 (KOHLI)<br><br>* colonne 3, ligne 21 - colonne 4, ligne 37 *<br>--- | 1,2,4,6,<br>10 | B25J17/02<br>B25J9/10 |
| Y | EP-A-0 127 895 (SUMITOMO ELECTRIC INDUSTRIES)<br><br>* page 5, ligne 4 - page 6, ligne 3 *<br>--- | 1,2,4,6,<br>10 | |
| A | US-A-4 848 179 (UBHAYAKAR)<br>* colonne 7, ligne 42 - ligne 51 *<br>--- | 2,3 | |
| A | DE-A-2 819 976 (STRATER)<br>* page 2, ligne 26 - ligne 35 *<br>--- | 7 | |
| A,D | WO-A-8 703 528 (SOGEVA)<br>* abrégé *<br><br>----- | 9 | |

### DOMAINES TECHNIQUES RECHERCHES (Int. Cl.5)

B25J

Le présent rapport a été établi pour toutes les revendications

| Lieu de la recherche | Date d'achèvement de la recherche | Examinateur |
|---|---|---|
| LA HAYE | 05 MARS 1992 | LAMMINEUR P.C.G. |

EPO FORM 1503 03.82 (P0402)